# EUROPEAN PATENT APPLICATION

(11) **EP 3 667 284 A1**
(43) Date of publication of application: **17.06.2020**
(21) Application number: 19210492.5
(22) Date of filing: 21.11.2019
(51) Int. Cl.: G01M 13/00, G05B 23/02

(54) **INFORMATION PRESENTATION DEVICE FOR INJECTION MOLDING MACHINE AND INFORMATION PRESENTATION METHOD FOR INJECTION MOLDING MACHINE**

(30) Priority: 14.12.2018 JP 2018234861
(71) Applicant: Sumitomo Heavy Industries, Ltd., Tokyo 141-6025 (JP)
(72) Inventor: MINEMURA, Kesaaki, Kanagawa,, 237-8555, (JP)
(74) Representative: Louis Pöhlau Lohrentz

(57) **Abstract**

Provided are an information presentation device for an injection molding machine that supports decision of a maintenance timing. The information presentation device for an injection molding machine includes a diagnosis unit (3) that diagnoses a deterioration state of a part to be inspected of the injection molding machine, a price calculation unit (7) that calculates a maintenance price of the part to be inspected based on a diagnosis result of the diagnosis unit (3), and a price presentation unit (8) that presents the calculated maintenance price.

## Description

### BACKGROUND OF THE INVENTION

### Field of the Invention

A certain embodiment of the present invention relates to an information presentation device for an injection molding machine and an information presentation method for an injection molding machine.

### Description of Related Art

Japanese Unexamined Patent Publication No. 2012-35553 discloses an inspection system for an injection molding machine including an injection molding machine, a portable terminal for inspection, and an information management device. The information management device includes a defect determination unit that determines whether or not a defect occurs in the injection molding machine, and an estimate creation unit that creates an estimate relating to a repair cost of a defective component determined by the defect determination unit.

### SUMMARY OF THE INVENTION

However, in the above-described method, maintenance is performed after a defect occurs, and there is a concern that the operation rate of the injection molding machine decreases.

Accordingly, an object of the present invention is to provide an information presentation device for an injection molding machine and an information presentation method for an injection molding machine that support decision of a maintenance timing.

An information presentation device for an injection molding machine according to an embodiment includes a diagnosis unit that diagnoses a deterioration state of a part to be inspected of the injection molding machine, a price calculation unit that calculates a maintenance price of the part to be inspected based on a diagnosis result of the diagnosis unit, and a price presentation unit that presents the calculated maintenance price.

According to the present invention, it is possible to provide an information presentation device for an injection molding machine and an information presentation method for an injection molding machine that support decision of a maintenance timing.

### BRIEF DESCRIPTION OF THE DRAWINGS

Fig. 1 is a configuration diagram of an injection molding machine system according to an embodiment.
Fig. 2 is a functional block diagram of an information presentation device for an injection molding machine according to the embodiment.
Fig. 3 shows an example of a display screen that is displayed by the information presentation device for an injection molding machine according to the embodiment.
Fig. 4 shows another example of a display screen that is displayed by the information presentation device for an injection molding machine according to the embodiment.
Fig. 5 shows still another example of a display screen that is displayed by the information presentation device for an injection molding machine according to the embodiment.

### DETAILED DESCRIPTION OF THE INVENTION

Hereinafter, a mode for carrying out the present invention will be described referring to the drawings. In the drawings, the same or corresponding configurations are represented by the same or corresponding reference numerals and description will not be repeated.

### Injection Molding Machine System

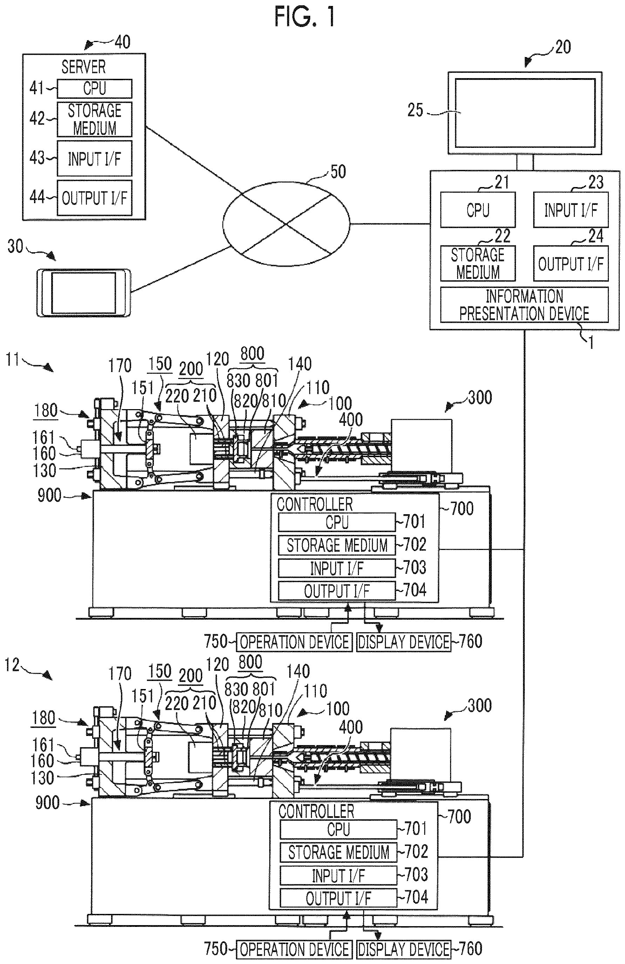

An injection molding machine system according to an embodiment will be described referring to Fig. 1. Fig. 1 is a configuration diagram of the injection molding machine system according to the embodiment.

The injection molding machine system includes a plurality (in an example of Fig. 1, two) of injection molding machines 11 and 12, a management device 20 that manages the injection molding machines 11 and 12, an information communication terminal 30, and a maintenance sever 40. The injection molding machines 11 and 12 and the management device 20 are connected to perform communication, for example, through a local area network (LAN) , serial communication, or the like. The management device 20, the information communication terminal 30, and the maintenance sever 40 are connected to perform communication, for example, through a communication network 50, such as an Internet network. The injection molding machines 11 and 12 and the management device 20 may be connected to perform communication through the communication network 50.

### Injection Molding Machine

The injection molding machines 11 and 12 will be described. The injection molding machines 11 and 12 have the same configuration. For this reason, the injection molding machine 11 will be described, and overlapping description of the injection molding machine 12 will not be repeated.

The injection molding machine 11 has a mold clamping unit 100, an ejector unit 200, an injection unit 300, a movement unit 400, a controller 700, and a frame 900. The controller 700 is disposed in an internal space of the frame 900. Hereinafter, the constituent elements of the injection molding machine 11 will be described.

### Mold Clamping Unit

The mold clamping unit 100 performs closing, pressurizing, clamping, depressurizing, and opening of a mold unit 800. The mold unit 800 includes a stationary mold 810 and a movable mold 820. The mold clamping unit 100 is, for example, a horizontal type mold clamping unit, and mold opening and closing directions are the horizontal direction. The mold clamping unit 100 has a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. The stationary mold 810 is attached to a surface of the stationary platen 110 facing the movable platen 120. The movable platen 120 is disposed to be movable in the mold opening and closing directions with respect to the frame 900. The movable mold 820 is attached to a surface of the movable platen 120 facing the stationary platen 110. The movable platen 120 moves forward or rearward with respect to the stationary platen 110, and thus, closing, pressurizing, clamping, depressurizing, and opening of the mold unit 800 are performed. The toggle support 130 is provided with a gap from the stationary platen 110, and is placed on the frame 900 to be movable in the mold opening and closing directions. The tie bar 140 connects the stationary platen 110 and the toggle support 130 with a gap in the mold opening and closing directions.

The toggle mechanism 150 is disposed between the movable platen 120 and the toggle support 130, and moves the movable platen 120 in the mold opening and closing directions with respect to the toggle support 130. The toggle mechanism 150 is constituted of a crosshead 151, a pair of link groups, and the like. In a case where the crosshead 151 moves forward or rearward with respect to the toggle support 130, the link groups are bent and stretched, and the movable platen 120 moves forward or rearward with respect to the toggle support 130. The mold clamping motor 160 is attached to the toggle support 130 and operates the toggle mechanism 150. The motion conversion mechanism 170 is constituted of, for example, a ball screw, and converts rotary motion of the mold clamping motor 160 to linear motion of the crosshead 151 to operate the toggle mechanism 150. A load detector 161 is provided in the mold clamping motor 160. The load detector 161 may be, for example, a current detector. The load detector 161 detects a current of the mold clamping motor 160 and outputs a signal indicating the current to the controller 700. The current of the mold clamping motor 160 represents a load (for example, torque) of the mold clamping motor 160.

The mold clamping unit 100 performs a mold closing process, a pressurizing process, a mold clamping process, a depressurizing process, a mold opening process, and the like under the control of the controller 700.

In the mold closing process, the mold clamping motor 160 is driven to move the crosshead 151 forward to a mold closing completion position at a set movement speed to move the movable platen 120 forward and to bring the movable mold 820 into contact with the stationary mold 810.

In the pressurizing process, the mold clamping motor 160 is further driven to move the crosshead 151 forward from the mold closing completion position to a mold clamping position to generate mold clamping force.

In the mold clamping process, the mold clamping motor 160 is driven to maintain the position of the crosshead 151 at the mold clamping position. In the mold clamping process, the mold clamping force generated in the pressurizing process is maintained. In the mold clamping process, a cavity space 801 is formed between the movable mold 820 and the stationary mold 810, and the injection unit 300 fills the cavity space 801 with a liquid molding material. The filled molding material is solidified, and thus, a molding product is obtained.

In the depressurizing process, the mold clamping motor 160 is driven to move the crosshead 151 rearward from the mold clamping position to a mold opening start position to move the movable platen 120 rearward and reducing the mold clamping force. The mold opening start position and the mold closing completion position may be the same position.

In the mold opening process, the mold clamping motor 160 is driven to move the crosshead 151 rearward from the mold opening start position to a mold opening completion position at a set movement speed to move the movable platen 120 rearward and separating the movable mold 820 from the stationary mold 810. Thereafter, the ejector unit 200 ejects the molding product from the movable mold 820.

Even though a space of the mold unit 800 is changed due to replacement of the mold unit 800, a temperature change of the mold unit 800, or the like, mold space adjustment is performed such that predetermined mold clamping force is obtained in a case where the mold is clamped. The mold space adjustment mechanism 180 adjusts the gap between the stationary platen 110 and the toggle support 130 to perform the mold space adjustment. A timing of the mold space adjustment is defined, for example, between the end of a molding cycle ends and the start of the next molding cycle.

### Ejector Unit

The ejector unit 200 is attached to the movable platen 120 and moves rearward along with the movable platen 120. The ejector unit 200 performs the ejection process under the control of the controller 700. In the ejection process, an ejector rod 210 is moved forward from a standby position to an ejection position at a set movement speed by a drive mechanism 220 to move the movable member 830 forward and to eject the molding product. Thereafter, the ejector rod 210 is moved rearward at a set movement speed by the drive mechanism 220 to move the movable member 830 rearward to an original standby position.

### Injection Unit

The injection unit 300 is disposed to be movable forward or rearward with respect to the mold unit 800. The injection unit 300 is brought into contact with the mold unit 800, and fills the cavity space 801 inside the mold unit 800 with the molding material. The injection unit 300 performs a plasticizing process, a filling process, a holding pressure process, and the like under the control of the controller 700. The filling process and the holding pressure process are also collectively referred to as an injection process. In the plasticizing process, a predetermined amount of the liquid molding material is accumulated. In the filling process, the cavity space 801 inside the mold unit 800 is filled with the liquid molding material accumulated in the plasticizing process. In the holding pressure process, a holding pressure of the molding material is held at a set pressure.

### Movement Unit

The movement unit 400 moves the injection unit 300 forward or rearward with respect to the mold unit 800.

### Controller

The controller 700 is constituted of, for example, a computer, and as shown in Fig. 1, has a central processing unit (CPU) 701, a storage medium 702, such as a memory, an input interface 703, and an output interface 704. The controller 700 makes the CPU 701 execute a program stored in the storage medium 702 to perform various kinds of control. The controller 700 receives a signal from the outside through the input interface 703 and transmits a signal to the outside through the output interface 704.

The controller 700 repeatedly performs the plasticizing process, the mold closing process, the pressurizing process, the mold clamping process, the filling process, the holding pressure process, the cooling process, the depressurizing process, the mold opening process, the ejection process, and the like to repeatedly manufacture the molding product. A series of operations to obtain the molding product, for example, an operation from the start of the plasticizing process to the start of the next plasticizing process is also referred to as a "shot" or a "molding cycle". A time needed for a single shot is also referred to as a "molding cycle time" or a "cycle time".

A single molding cycle has, for example, the plasticizing process, the mold closing process, the pressurizing process, the mold clamping process, the filling process, the holding pressure process, the cooling process, the depressurizing process, the mold opening process, and the ejection process in this order. Here, the order is an order of the start of each process. The filling process, the holding pressure process, and the cooling process may be performed during the mold clamping process. The start of the mold clamping process may coincide with the start of the filling process. The end of the depressurizing process may coincide with the start of the mold opening process.

In order to reduce the molding cycle time, a plurality of processes may be performed simultaneously.

The single molding cycle may have processes other than the plasticizing process, the mold closing process, the pressurizing process, the mold clamping process, the filling process, the holding pressure process, the cooling process, the depressurizing process, the mold opening process, and the ejection process.

The controller 700 is connected to an operation device 750 or a display device 760. The operation device 750 receives an input operation from a user and outputs a signal according to the input operation to the controller 700. The display device 760 displays a display screen according to the input operation on the operation device 750 under the control of the controller 700.

The display screen is used for the setting of the injection molding machine 11, or the like. A plurality of display screens are prepared, and are displayed to be switched or to overlap one another. The user operates the operation device 750 while viewing the display screen displayed on the display device 760 to perform the setting (including an input of a set value) of the injection molding machine 11, or the like.

The operation device 750 and the display device 760 may be constituted of, a touch panel and may be integrated with each other. Although the operation device 750 and the display device 760 of the embodiment are integrated with each other, the operation device 750 and the display device 760 may be provided independently. A plurality of operation devices 750 may be provided.

### Management Device

The management device 20 functions as a management device of the injection molding machines 11 and 12. The management device 20 is, for example, a computer that is provided in an office of the user, a management center, or the like that operates the injection molding machines 11 and 12, and stores and manages information transmitted from the injection molding machines 11 and 12. The management device 20 has a CPU 21, a storage medium 22, such as a memory, an input interface 23, an output interface 24, and a display unit 25.

### Information Communication Terminal

The information communication terminal 30 is a device that can refer to information stored in the management device 20. The information communication terminal 30 is constituted of, for example, a smartphone, a tablet terminal (a slate terminal), a notebook PC (a laptop PC), or the like, and has a CPU, a storage medium, such as a memory, an input interface, an output interface, a display unit, and the like.

### Server

The maintenance sever 40 is provided in an office of a service provider that provides a maintenance service of the injection molding machines 11 and 12. The maintenance sever 40 has a CPU 41, a storage medium 42, such as a memory, an input interface 43, and an output interface 44.

### Information Presentation Device for Injection Molding Machine

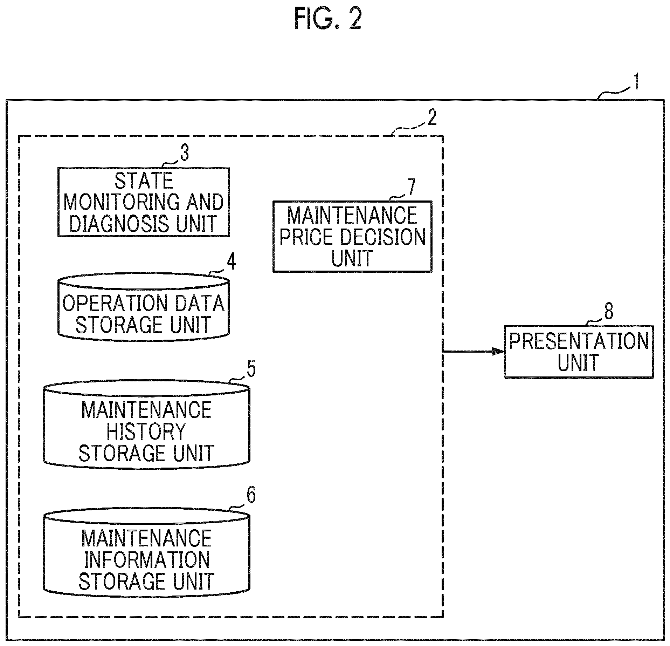

Next, an information presentation device 1 for an injection molding machine that is used in the injection molding machine system will be described referring to Fig. 2. Fig. 2 is a functional block diagram of the information presentation device 1 for an injection molding machine according to the embodiment.

The information presentation device 1 is a device that calculates a maintenance price of a part to be inspected of the injection molding machines 11 and 12 and presents the calculated maintenance price to a presentation unit 8. The information presentation device 1 includes an information processing unit 2 and the presentation unit 8. The information processing unit 2 has a state monitoring and diagnosis unit 3, an operation data storage unit 4, a maintenance history storage unit 5, a maintenance information storage unit 6, and a maintenance price decision unit 7.

Here, the part to be inspected is, for example, a component to be a target of inspection of the injection molding machines 11 and 12 or a component of the injection molding machines 11 and 12 to be a target of maintenance. Examples of the part to be inspected include a ball screw of the motion conversion mechanism170, abushing (a wear component) of the toggle mechanism 150, a ball screw of the drive mechanism 220, a ball screw that drives a screw of the injection unit 300 in an axial direction, the frame 900, and the like. In the following description, it is assumed that the part to be inspected is the ball screw of the motion conversion mechanism 170. In this case, a load of the part to be inspected is detected by the load detector 161 provided in the mold clamping motor 160 that drives the ball screw of the motion conversion mechanism 170.

For example, the information presentation device 1 is provided in the management device 20 as shown in Fig. 1. The state monitoring and diagnosis unit 3 and the maintenance price decision unit 7 are implemented, for example, by the CPU 21 of the management device 20 executing a program. The operation data storage unit 4, the maintenance history storage unit 5, and the maintenance information storage unit 6 are provided, for example, in the storage medium 22 of the management device 20. The presentation unit 9 is implemented, for example, by the CPU 21 of the management device 20 executing the program, and makes the display unit 25 of the management device 20 a screen for presenting a maintenance price of the part to be inspected.

The operation data storage unit 4 stores operation data of the part to be inspected transmitted from the controller 700 of each of the injection molding machines 11 and 12. The operation data of the part to be inspected may include, for example, information regarding an operation time, the number of used shots, a detection value of the load detector 161, and the like.

The maintenance history storage unit 5 stores a maintenance history of the part to be inspected transmitted from the controller 700 of each of the injection molding machines 11 and 12. The maintenance history may include, for example, information regarding date and time on which maintenance is performed for each part to be inspected, and the like.

The state monitoring and diagnosis unit 3 monitors and diagnoses a deterioration state of the part to be inspected. Here, the deterioration state of the part to be inspected includes, for example, fatigue, deterioration, wear, failure, abnormality, or the like. The state monitoring and diagnosis unit 3 diagnoses the deterioration state of the part to be inspected, for example, based on at least one of a cumulative operation time of the part to be inspected, the cumulative number of shots of the part to be inspected, and a cumulative load of the part to be inspected.

For example, in a case where the part to be inspected is the ball screw of the motion conversion mechanism 170, the state monitoring and diagnosis unit 3 calculates the cumulative load of the ball screw based on the detection value of the load detector 161 stored in the operation data storage unit 4. Then, the state monitoring and diagnosis unit 3 diagnoses the deterioration state of the ball screw based on the cumulative load of the ball screw. A detection value of a strain sensor (not shown) provided in the ball screw of the motion conversion mechanism 170 may be stored on the operation data storage unit 4. The state monitoring and diagnosis unit 3 may calculate the cumulative load of the ball screw based on the detection value of the strain sensor and may diagnose the deterioration state of the ball screw. A load of the part to be inspected may be estimated from molding conditions of the injection molding machine having the part to be inspected.

The state monitoring and diagnosis unit 3 may calculate the cumulative operation time of each part to be inspected based on information stored in the operation data storage unit 4 and the maintenance history storage unit 5. For example, in a case where determination is made that the maintenance of the part to be inspected is not performed even once from the maintenance history of the maintenance history storage unit 5, the state monitoring and diagnosis unit 3 calculates the accumulation of the operation time from the operation start to the present time as the cumulative operation time of the part to be inspected based on the operation data of the operation data storage unit 4. In a case where determination is made that the maintenance of the part to be inspected is performed from the maintenance history of the maintenance history storage unit 5, the state monitoring and diagnosis unit 3 calculates the accumulation of the operation time from the maintenance to the present time as the cumulative operation time of the part to be inspected based on the operation data of the operation data storage unit 4. In a case where the maintenance of the part to be inspected is performed, the cumulative operation time is reset, and the accumulation of the subsequent operation time is calculated as the cumulative operation time of the part to be inspected. Then, the state monitoring and diagnosis unit 3 diagnoses the deterioration state of the part to be inspected based on the calculated cumulative operation time. For example, the state monitoring and diagnosis unit 3 has a table, in which the cumulative operation time and the deterioration state are associated with each other, and diagnoses the deterioration state based on the table.

The state monitoring and diagnosis unit 3 may diagnose the deterioration state of the part to be inspected based on the cumulative operation time of the injection molding machine after the part to be inspected is attached to the injection molding machine. For example, the state monitoring and diagnosis unit 3 may calculate the cumulative operation time of the injection molding machine after the attachment of the part to be inspected to the injection molding machine based on information stored in the operation data storage unit 4 and the maintenance history storage unit 5. Then, the state monitoring and diagnosis unit 3 diagnoses the deterioration state of the part to be inspected based on the calculated cumulative operation time of the injection molding machine. Here, the cumulative operation time of the injection molding machine and the cumulative operation time of the part to be inspected have a proportional relationship. For this reason, for example, it is possible to diagnose the deterioration state of the part to be inspected based on the table, in which the cumulative operation time of the injection molding machine and the deterioration state of the part to be inspected are associated with each other.

Similarly, the state monitoring and diagnosis unit 3 may calculate the cumulative number of shots of each part to be inspected based on information stored in the operation data storage unit 4 and the maintenance history storage unit 5. The state monitoring and diagnosis unit 3 may calculate the cumulative load of the part to be inspected based on information stored in the operation data storage unit 4 and the maintenance history storage unit 5. The cumulative load may be calculated by multiplying a load in one shot by the cumulative number of shots. The load in one shot may be obtained in advance.

The maintenance information storage unit 6 stores information transmitted from the maintenance sever 40. Here, in the maintenance sever 40, for example, busy season information of a maintenance provider and information for use in deciding the maintenance price, such as a parts price, a work cost, a work time, and the number of workers of each part to be inspected, are stored. The kinds of information are transmitted from the maintenance sever 40 to the information presentation device 1 and are stored in the maintenance information storage unit 6.

The maintenance price decision unit 7 decides the maintenance price of the part to be inspected based on the diagnosis result of the state monitoring and diagnosis unit 3 and information stored in the maintenance information storage unit 6.

The maintenance price decision unit 7 decides the maintenance price based on a parts price of a part to be inspected to be replaced in maintenance, a wage in performing the maintenance of the part to be inspected, and a weighting coefficient.

In an example, the state monitoring and diagnosis unit 3 diagnoses the remaining lifetime (an example of the deterioration state) of the part to be inspected based on at least one of the cumulative operation time of the part to be inspected, the cumulative number of shots of the part to be inspected, and the cumulative load of the part to be inspected. The maintenance price decision unit 7 decides the weighting coefficient based on the remaining lifetime of the part to be inspected. Here, the weighting coefficient based on the remaining lifetime of the part to be inspected may be set such that the longer the remaining lifetime, the smaller the weighting coefficient, and the shorter the remaining lifetime, the greater the weighting coefficient. With this, the maintenance price decision unit 7 decreases the maintenance price as the remaining lifetime is longer and increases the maintenance price as the remaining lifetime is shorter.

In an example, the maintenance price decision unit 7 decides the weighting coefficient based on a maintenance plan. For example, the weighting coefficient maybe set such that the longer a period between date and time on which the maintenance of the part to be inspected is requested and date and time on which the maintenance of the part to be inspected is actually performed, the smaller the weighting coefficient, and the shorter the period, the greater the weighting coefficient. With this, the maintenance price decision unit 7 decreases the maintenance price as the period is longer and increases the maintenance price as the period is shorter. The weighting coefficient may be set such that the wider a range of a timing at which the maintenance of the part to be inspected is performed, the smaller the weighting coefficient, and the narrower the range of the timing at which the maintenance is performed, the greater the weighting coefficient. With this, the maintenance price decision unit 7 decreases the maintenance price as the range is wider and increases the maintenance price as the range is narrower.

In an example, the maintenance price decision unit 7 decides the weighting coefficient according to the magnitude of the number of machines or the number of items in requesting maintenance. For example, in a case where a plurality of kinds of maintenance are requested simultaneously, the weighting coefficient may be set to be smaller compared to a case where the maintenance is requested individually. With this, in a case where a plurality of kinds of maintenance are requested simultaneously, the maintenance price decision unit 7 decreases the maintenance price compared to a case where the maintenance is requested individually.

In an example, the maintenance price decision unit 7 decides the weighting coefficient based on the busy season information of the maintenance provider. Here, the busy season information of the maintenance provider is transmitted from the maintenance sever 40 to the maintenance price decision unit 7. The maintenance price decision unit 7 decides the weighting coefficient based on the busy season information. The weighting coefficient may be transmitted from the maintenance sever 40 to the maintenance price decision unit 7. For example, in a case where the date and time on which the maintenance of the part to be inspected is performed is in an off-season, the weighting coefficient may be set to be smaller compared to a case where the date and time of the maintenance is in a busy season. With this, in a case where the date and time on which the maintenance of the part to be inspected is performed is in the off-season, the maintenance price decision unit 7 decreases the maintenance price compared to a case where the date and time of the maintenance is in the busy season.

In an example, the maintenance price decision unit 7 decides the weighting coefficient based on the personnel of the maintenance provider and an inventory of replacement components. Here, information of the maintenance provider is transmitted from the maintenance sever 40 to the maintenance price decision unit 7. The maintenance price decision unit 7 decides the weighting coefficient based on information of the maintenance provider. The weighting coefficient may be transmitted from the maintenance sever 40 to the maintenance price decision unit 7. For example, in a case where there is a margin in the personnel or an inventory quantity of replacement components on date and time on which the maintenance of the part to be inspected is performed, the weighting coefficient may be set to be smaller compared to a case where there is no margin in the personnel or the inventory quantity of the replacement components. With this, in a case where there is a margin in the personnel or the inventory quantity of the replacement components, the maintenance price decision unit 7 decreases the maintenance price compared to a case where there is no margin in the personnel or the inventory quantity of the replacement components.

The presentation unit 8 presents the maintenance price decided by the maintenance price decision unit 7.

Although an example where the information presentation device 1 is provided in the management device 20 has been described, the present invention is not limited thereto. The information presentation device 1 may be provided in the injection molding machine 11 or 12, maybe provided in the information communication terminal 30, or may be provided in the maintenance sever 40. The position where the information presentation device 1 is provided is not limited. The units of the information presentation device 1 may be distributed into different devices.

Although an example where the presentation unit 8 makes the display unit 25 of the management device 20 display a screen for presenting the maintenance price of the part to be inspected, the present invention is not limited thereto. The presentation unit 8 may make at least one of the display device 760 of the injection molding machine 11 or 12, the display unit 25 of the management device 20, and the display unit of the information communication terminal 30 display the screen for presenting the maintenance price of the part to be inspected. A presentation method of the maintenance price in the presentation unit 8 is not limited to the screen display, and other presentation methods may be employed. For example, the maintenance price may be presented by a voice output.

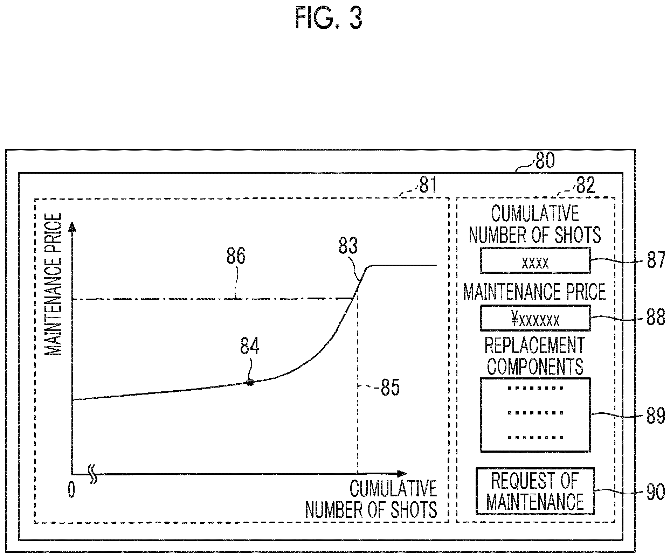

Next, an example of a display screen that is displayed by the information presentation device 1 for an injection molding machine will be described referring to Figs. 3 to 5. Fig. 3 shows an example of the display screen that is displayed by the information presentation device 1 for an injection molding machine according to the embodiment.

A display screen 80 is displayed, for example, on the display unit 25 of the management device 20. The display screen 80 includes a price trend display portion 81 and a breakdown display portion 82.

In the price trend display portion 81, past, present, and future maintenance prices are displayed as a price line 83 in a graph with the horizontal axis as the cumulative number of shots and the vertical axis as the maintenance price. With this, a trend (temporal trend) of the maintenance price according to the number of shots is displayed, and thus, it is possible to visualize fluctuation in price according to a timing at which the maintenance is performed. Although an example where the price trend display portion 81 displays the relationship between the cumulative number of shots and the maintenance price has been described, the relationship between the cumulative operation time and the maintenance price maybe displayed or the relationship between the cumulative load and the maintenance price may be displayed.

Although the price line 83 is shown as a continuous line, the present invention is not limited thereto, and the price line 83 may be a discontinuous line such that the maintenance price is increased in a stepwise manner in a case where a predetermined cumulative number of shots is reached. In this case, in a case where a timing at which the maintenance price increases is approached, an alert may be displayed in advance.

In the price trend displayportion 81, a symbol 84 indicating the present cumulative number of shots and the present maintenance price is displayed. In the example of Fig. 3, the symbol 84 is displayed as a black circle on the price line 83 corresponding to the present cumulative number of shots.

In the price trend displayportion 81, a symbol 85 indicating a threshold of the number of shots is displayed. In the example of Fig. 3, the symbol 85 is displayed as a broken line that extends in the vertical direction displayed at a position corresponding to the threshold of the number of shots. Here, the threshold of the number of shots is, for example, a threshold for determining a possibility of failure, and is the number of shots to be an index for maintenance.

As indicated by the price line 83, in the maintenance price decision unit 7, the maintenance price is decided such that the maintenance price increases with an increase in the cumulative number of shots . In a region where the cumulative number of shots is less than the threshold, the maintenance price increases gently. On the other hand, in a region where the cumulative number of shots is equal to or greater than the threshold, the maintenance price increases rapidly compared to the region where the cumulative number of shots is less than the threshold. In a case where the cumulative number of shots increases to be equal to or greater than a predetermined value, the inclination of the maintenance price may be small or constant.

In the price trend displayportion 81, a symbol 86 indicating a threshold price is displayed. In the example of Fig. 3, the symbol 86 is displayed as a one-dot-chain line that extends in a horizontal direction displayed at a position corresponding to the threshold price. Here, the threshold price is a price that can be optionally set by a maintenance requester. For example, in a case where the present maintenance price reaches the threshold price, an alert may be displayed.

The breakdown display portion 82 has a shot count display column 87, a price display column 88, and a breakdown display column 89. In the shot count display column 87, the present cumulative number of shots is displayed. Instead of the shot count display column 87, a display column where the cumulative operation time is displayed or a display column where the cumulative load is displayed may be provided. In the price display column 88, the present maintenance price is displayed. In the breakdown display column 89, a breakdown, a work breakdown, the number of days for work, and the like of a part to be replaced in performing maintenance at the present time are displayed as information of the ground of the maintenance price.

On the display screen 80, an operation button 90 that is provided to request maintenance is displayed. In a case where a requester who requests maintenance selects and operates the operation button 90 with a pointing device or the like, the CPU 21 of the management device 20 transmits the request of the maintenance to the maintenance sever 40. In this case, information of the injection molding machine may be made to be transmitted. In a case where the operation button 90 is selected and operated, and for example, in a case where the maintenance price decreases shortly (for example, the maintenance price decreases in the off-season), an alert may be displayed.

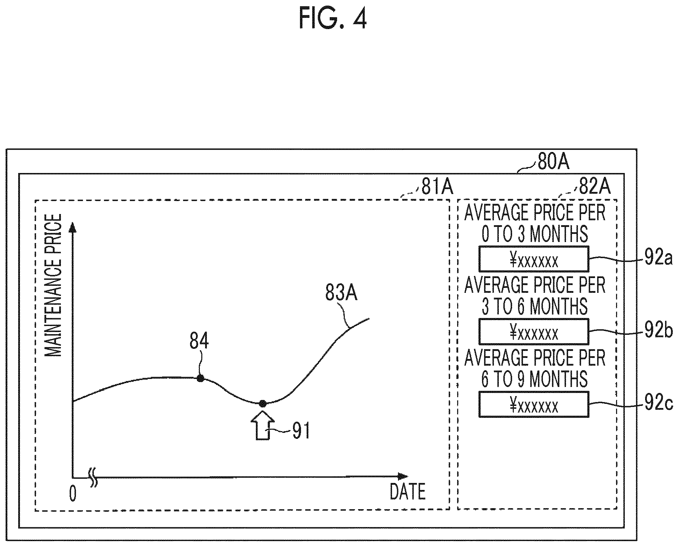

Fig. 4 shows another example of a display screen that is displayed by the information presentation device 1 for an injection molding machine according to the embodiment. In Fig. 4, for example, an example where the maintenance price fluctuates based on the busy season information is shown. For example, a case where, in a case where the date elapses the present time indicated by a symbol 84, the off-season comes and the maintenance price decreases less than the current maintenance price, and in a case the date further elapses, the busy season comes again, and maintenance price increases is shown as an example.

A display screen 80A is displayed, for example, on the display unit 25 of the management device 20. The display screen 80A includes a price trend display portion 81A and an average price display portion 82A.

In the price trend display portion 81A, past, present, and future maintenance prices are displayed as a price line 83A in a graph with the horizontal axis as the date and the vertical axis as the maintenance price. The symbol 84 indicates the present date and the present maintenance price. In the price trend display portion 81A, a symbol 91 indicating the lowest price is displayed. In the example of Fig. 4, the symbol 91 is displayed as a white arrow.

In the average price display portion 82A, price display columns 92a to 92c where the average price of the maintenance prices of each predetermined period are provided.

In this way, the information presentation device 1 displays the display screen 80A, and thus, it is possible to support the requester who requests the maintenance to easily ascertain a timing at which the maintenance price is inexpensive.

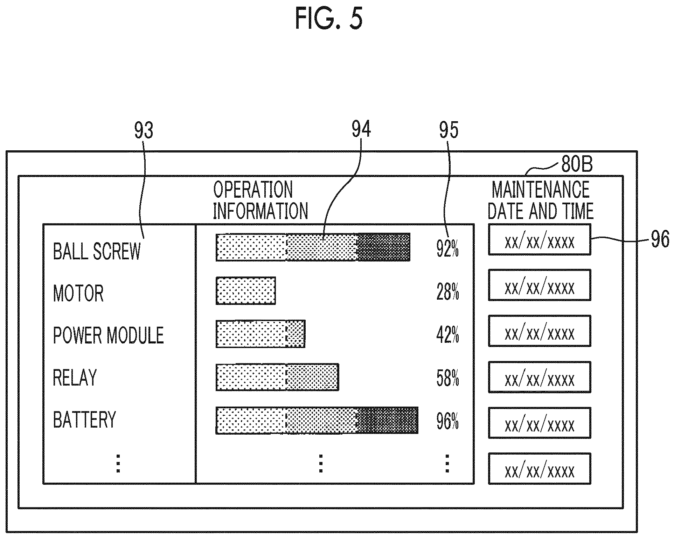

Fig. 5 shows still another example of a display screen that is displayed by the information presentation device 1 for an injection molding machine according to the embodiment. For example, in a case where the price display column 88 is selected and operated with a pointing device or the like on the display screen 80 shown in Fig. 3, the display screen 80 is switched to a display screen 80B shown in Fig. 5.

On the display screen 80B, component names 93 of a plurality of components to be a part to be inspected are displayed. Here, "ball screw", "motor", "power module", "relay", "battery", and the like are displayed. A bar 94 and a numerical display column 95 indicating the remaining lifetime of the part to be inspected are displayed corresponding to the part to be inspected. The values of the bar 94 and the numerical display column 95 are set to 0% in a case where the part to be inspected is unused (immediately after maintenance), and are set to 100% in a case where the lifetime of the part to be inspected ends. That is, the longer the length of the bar 94 and the greater the value of the numerical display column 95, the less the remaining lifetime of the part to be inspected. The remaining lifetime of the part to be inspected is calculated by the state monitoring and diagnosis unit 3. A color may be changed according to the length of the bar 94. In Fig. 5, a hatching pattern is changed. With this, the change can be used as an index for preparation (for example, an estimate request) of the maintenance of the part to be inspected. In a case where the part to be inspected continues to be used even after the lifetime ends, as the value of the numerical display column 95, a value of 100% or more is displayed. With this, it is possible to ascertain how much the part to be inspected is used over the lifetime. The length of the bar 94 to be displayed may be the length at the time of the end of the lifetime (at the time of 100%). A maintenance date and time display column 96 is provided corresponding to the part to be inspected. In the maintenance date and time display column 96, date and time on which the maintenance of the part to be inspected is finally performed is displayed based on the maintenance history of the maintenance history storage unit 5.

In this way, the information presentation device 1 displays a list of the remaining lifetime of a plurality of parts to be inspected on the display screen 80B, and thus, can support the requester who requests the maintenance to easily ascertain the part to be inspected for which the maintenance is performed.

With the information presentation device for an injection molding machine according to the embodiment, it is possible to present the maintenance price in performing the maintenance of the part to be inspected. With this, it is possible to support selection in a case where the requester who requests the maintenance selects the maintenance timing of the part to be inspected.

Here, in the method of the related art, the maintenance price has been decided by the parts price and the wage without depending on the use situation of the injection molding machine. For this reason, for example, since the part to be inspected is replaced after damage regardless of the advance of the deterioration state of the part to be inspected, there is a concern that the stop period of the injection molding machine is extended because of securing a worker for the maintenance, or the like, and the operation rate of the injection molding machine decreases .

In contrast, with the information presentation device for an injection molding machine according to the embodiment, the maintenance price is presented based on the deterioration state (for example, fatigue, deterioration, wear, failure, abnormality, or the like) of the part to be inspected. With this, it is possible to prompt the requester who requests the maintenance for early replacement. Therefore, it is possible to reduce the stop period of the injection molding machine to suppress a decrease in the operation rate of the injection molding machine.

Although the embodiment and the like of the injection molding machine have been described above, the present invention is not limited to the above-described embodiment and the like, various modifications and improvements may be made without departing from the concept and scope of the present invention described in the claims.

In the information presentation device for an injection molding machine according to the embodiment, although an example where the display screen 80 of Fig. 3 or the like is displayed on the display unit 25 or the like to present the maintenance price has been described, the present invention is not limited thereto. The information presentation device for an injection molding machine may present the maintenance price also using voice. Alternatively, the maintenance price may be presented by voice solely.

Although an example where the price is displayed in the graph in the price trend display portion 81 of the display screen 80 has been described, the present invention is not limited thereto . For example, the price may be identified using different colors for predetermined price widths, and a trend of the maintenance price may be presented by a color bar in a simplified manner.

Although an example where the information presentation device for an injection molding machine presents the maintenance price has been described, a warranty period of the part to be inspected may be presented. The information presentation device for an injection molding machine may decide and present the warranty period of the part to be inspected, for example, based on an operation state of the injection molding machine having the part to be inspected.

Although an example where the maintenance price decision unit 7 decides the weighting coefficient based on the busy season information of the maintenance provider, the present invention is not limited thereto. For example, a company that operates the injection molding machine may decide the weighting coefficient based on the busy season information . In other words, the operation rate of the injection molding machine increases, and the weighting coefficient in a period during which urgent maintenance is requested is made large. With this, it is possible to prompt maintenance before the busy season, and to suppress a decrease in operation rate of the injection molding machine.

### Brief Description of the Reference Symbols

1: information presentation device
2: information processing unit
3: state monitoring and diagnosis unit (diagnosis unit)
4: operation data storage unit
5: maintenance history storage unit
6: maintenance information storage unit
7: maintenance price decision unit (price calculation unit)
8: presentation unit (price presentation unit)
11, 12: injection molding machine
20: management device
25: display unit (price presentation unit)
30: information communication terminal (price presentation unit)
40: maintenance server
50: communication network
80: display screen
81: price trend display portion
82: breakdown display portion
83: price line
84 to 86: symbol
87: shot count display column
88: price display column
89: breakdown display column
90: operation button
760: display device (price presentation unit)

## Claims

1. An information presentation device (1) for an injection molding machine comprising:
a diagnosis unit (3) that diagnoses a deterioration state of a part to be inspected of the injection molding machine (11, 12);
a price calculation unit (7) that calculates a maintenance price of the part to be inspected based on a diagnosis result of the diagnosis unit (3); and
a price presentation unit (8) that presents the calculated maintenance price.

2. The information presentation device (1) according to claim 1,
wherein the diagnosis unit (3) diagnoses the deterioration state of the part to be inspected based on at least one of a cumulative operation time, the cumulative number of shots, and a cumulative load of the part to be inspected.

3. The information presentation device (1) according to claim 1 or 2,
wherein the price presentation unit (8) displays a temporal trend of the maintenance price.

4. The information presentation device (1) according to any one of claims 1 to 3,
wherein the price calculation unit (7) calculates the maintenance price of the part to be inspected based on a weighting coefficient that becomes greater as the deterioration state of the part to be inspected advances.

5. The information presentation device (1) according to any one of claims 1 to 4,
wherein the price calculation unit (7) calculates the maintenance price of the part to be inspected based on busy season information.

6. An information presentation method for an injection molding machine, the method comprising:
diagnosing a deterioration state of a part to be inspected of the injection molding machine (11, 12);
calculating a maintenance price of the part to be inspected based on a diagnosis result; and
presenting the calculated maintenance price.
